Europäisches Patentamt

European Patent Office

Office européen des brevets

(19)

(11) **EP 1 182 578 A1**

(12) ## EUROPEAN PATENT APPLICATION

(43) Date of publication:
**27.02.2002 Bulletin 2002/09**

(51) Int Cl.$^7$: **G06F 17/30**

(21) Application number: **00118457.1**

(22) Date of filing: **25.08.2000**

(84) Designated Contracting States:
**AT BE CH CY DE DK ES FI FR GB GR IE IT LI LU MC NL PT SE**
Designated Extension States:
**AL LT LV MK RO SI**

(71) Applicants:
• **Ernst, Holger, Dr.**
**56068 Koblenz (DE)**
• **Teichert, Thorsten, Dr.**
**14050 Berlin (DE)**

(72) Inventors:
• **Ernst, Holger, Dr.**
**56068 Koblenz (DE)**
• **Teichert, Thorsten, Dr.**
**14050 Berlin (DE)**

(74) Representative: **Richardt, Markus Albert**
**Quermann & Richardt Unter den Eichen 726**
**65195 Wiesbaden (DE)**

(54) **System, method and computer program for patent and technology related information management and processing**

(57)    The invention relates to a method for generating a database for storing quality measurements for a set of documents, such as scientific, technical, business and/or legal documents, in particular patents, patent applications, technical or scientific publications, comprising the steps of

a) accessing at least one data source containing data of and/or relating to the set of documents;

b) extracting a set of data out of the data source for each document of the set of documents; and

c) determining a set of quality measurements for each document of the set of documents by processing each set of data belonging to the corresponding document.

Fig. 1

**Description**

The present invention is generally related to methods for generating a database and data processing, and more particularly related to databases and processing of documents such as patents and/or other scientific, technical, business and/or legal documents.

From US-A-5991751 a system is known which maintains first databases of patents and second databases of non-patent information of interest to a corporate entity. Each of the groups comprises any number of the patents from the first databases. The system, upon receiving appropriate operator commands, automatically processes the patents in one of the groups in conjunction with non-patent information from the second databases. Accordingly, the system performs patent-centric and group-orientated processing of data. A group can also include any number of non-patent documents. The groups may be product-based, person-based, corporate entity-based or user-defined. Other types of groups are also covered, such as temporary groups. The processing automatically performed buy the system relates to patent mapping, document mapping, patent citation, patent aging, patent bracketing/clustering, inventor patent count, inventor employment information, and finance.

From US-A-5721910 a method of producing a database is known. The database can be used to determine the meaning of scientific or technical documents, such as patents and/or technical or scientific publications and/or abstracts of these patents or publications, and to assign the technical documents to one or more scientific or technical categories within a multi-dimensional hierarchical model which reflects the business, scientific or technical interests of the business, scientific or technical entity or specialty.

From US-A-6,038,561 an interactive system for analyzing and displaying information contained in a plurality of documents employing both term-based analysis and conceptual-representation analysis is known. This system can be used for analyzing patent texts, such as patent claims, abstracts and other portions of a patent document.

From US-A-6038561 an interactive system for analyzing and displaying information contained in a plurality of documents employing both term-based analysis and conceptual-representation analysis is known. Particulars of the invention can be used for analyzing patent texts, such as patent claims, abstracts and other portions of a patent documents.

From EP-A-0 940 762 a multilingual patent information search system is known. The information search apparatus is a server for searching for, e.g., patent information filed in Japan, and searches various databases storing Japanese patent information and the like in response from the client terminal.

A common disadvantage of the prior art is the amount of processing power and time required for database searching and/or creation and processing of data. Another disadvantage is that the results of the data analysis are not outputted in an intuitive format.

It is therefore an object of the invention to provide an improved method for generating a database and an improved method for processing patent and/or technology related information.

The underlying problem of the invention is solved by applying the features laid down in the independent claims. Preferred embodiments are given in the dependent claims.

The invention allows the generation of a database containing quality measurements for a set of documents, such as patents. Such a database can serve as a basis for further analysis of the patent related data contained in the database.

In a first alternative a user can direct the database to output a table containing document related data in an ordered form. For a large number of documents this output form may not be intuitive. This is why in a second alternative a user can employ the processing method of the invention in order to generate a diagrammatic output of the database containing competitive data in condensed and intuitive form. As a third alternative the method of the invention can be employed to produce other graphical outputs, e.g. a so called "Spider Net", for display of the relevant contents of the database.

The database of the invention allows the analysis of its corresponding documents in various ways whereby a user can readily change parameters. Changing parameters for the purposes of document analysis does not require an alteration or reprocessing of the database but rather employing the method for processing of the invention. This way, a substantial amount of database query time and computing time is saved.

For example: A user can use the database of the invention to generate a display of its company's patenting activities over a first timeframe of- for example - five (5) years. This produces a first diagrammatic output. This output is expressive of the quality of the company's patenting activities related to patenting quality and provides a detailed view of the strength and weaknesses of such patenting activities and quality.

In the next step the user can generate a corresponding output for the next five (5) years window and overlap this output with the first output such that a development trend over time becomes apparent. Likewise, the same database can be used to compare the patenting activity of competing companies or even of different states, territories or industries.

The invention is advantageous in that it allows a person which is not necessarily a technical specialist - such as a general or commercial manager - to readily access patent related data and understand the competitive position of a company as compared to other companies. The invention is further of benefit for purposes of patent and/or technology portfolio management.

The invention allows an in-depth analysis of patent related data going beyond the pure number count of patents. The invention allows to integrate technical and economic data into the patent analysis and the calibration of the weighting of the different kinds of data for the generation of quality measurements.

The invention further allows the combination of numerical and textual information as extracted out of existing databases to produce a database which forms the basis for further analysis and intuitive display of information.

In the following a preferred embodiment of the invention is described in more detail by reference to the drawing in which

Fig. 1 is a flow chart of an embodiment of the method for generating a database of the invention;

Fig. 2 is an example of a tabular output of the database;

Fig. 3 is a flow chart of an embodiment of the method for processing of the invention; and

Fig. 4 is an example of the resulting graphic output of the processing method.

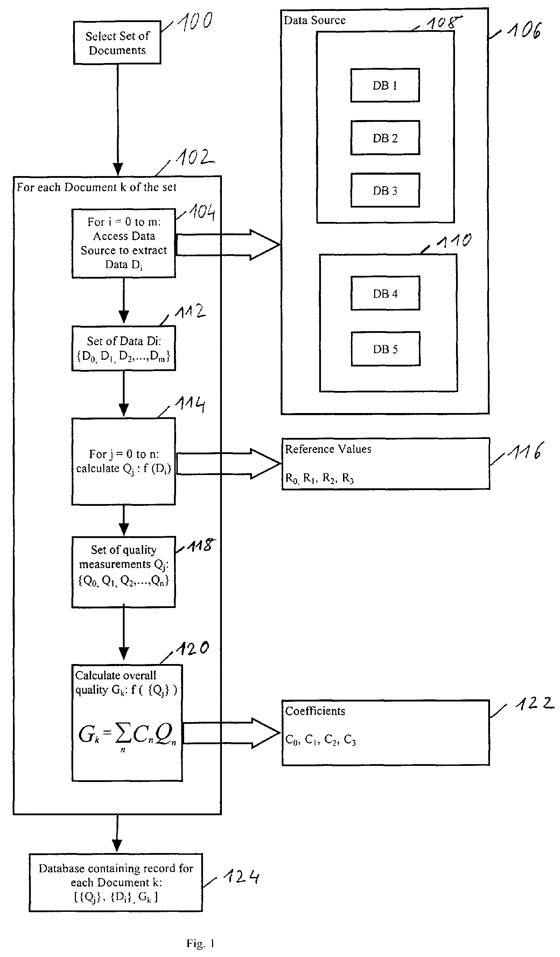

In Fig. 1 a flow chart is depicted illustrating the generation of a database. In step 100 a set of documents is defined for which the database is to be generated. The set of documents can be for example all patent applications/patents of a specific company or group of companies or within a certain field of technology or patents/patent applications made within a certain timeframe, patents/patent applications of a particular country, region or industry or a combination or sub-combination of the above. In addition or alternatively the set of documents can also be defined to comprise other scientific, technical, business and/or legal documents.

By way of example it is assumed in the following that the set of documents selected in step 100 consists of granted patents worldwide of a group of companies {company 1, company 2, company 3, company 4, company 5}. This set of documents can be determined by querying a database - such as "Derwent patent index" commercially available from Derwent Information Ltd. - for all granted patents of these five companies. For the purposes of this example it is assumed that this query results in a set of 5000 patent documents.

The following step 102 is carried out for each patent document k of the set of documents determined in step 100.

In step 104 a data source 106 is accessed m + 1 times in order to extract data $\{D0, D1, D2,... D_i,..., D_m\}$ out of the data source 106. The data source 106 can comprise a variety of databases such as external data source 108 and internal data source 110. External data source 108 has databases DB1, DB2 and DB3, which can be internet-accessible patent office data bases such as the data bases of the United States Patent and Trademark Office, the European Patent Office and the German Patent Office, or commercially available databases as - for example - database products from the Dialog corporation or Derwent Information Ltd.

The internal data source 110 can comprise databases DB4 and DB5 comprising company specific data such as licensing income of patents, compensation payments to employee inventors, purchase prices paid for patents, company usage of a patent and usage in which products, company savings based on usage of a patent, and expert opinions on the value of a patent.

As a matter of principle any database containing one or more of the data $\{D0, D1, D2,... D_i,..., D_m\}$ can be accessed to automatically extract the data of interest. There are a variety of mechanisms to extract such data out of a database.

In case the format of a data record is known as a priori information to the software program performing the extraction the software can access the data record in a database corresponding to the document k under consideration to look up a data value $D_i$ for such a document. If the format is not known or if it varies a semantic and/or syntactic approach can be utilized by the software to access the required data. This is particularly relevant for reading legal status information out of an external database.

The method of the invention is also capable to read the same data $D_i$ from different data sources. This can be an option in case more than one database is available having the same kind of data but being updated at different intervals or for purposes of consistency check between different databases. By providing this redundancy errors contained in a database can be eliminated.

Typically each document k has an assigned reference number in each of the databases. When accessing the document and/or data related to that document from a database this reference number preferably is also read out of the database and stored in a concordance list of reference numbers relating the internal reference number k given to the document in the database being generated to the corresponding reference numbers used in the external and internal databases. Such a concordance list is useful for repeated access to the same records in the external and internal databases.

Further, the extraction of the data might require a recoding of the data. For example, the number of inventors of a patent may not be available in the database but the names of the inventors. The extraction program will recognize the number of inventor names and will thus make available the number of co-inventors.

Further, when accessing certain types of data a statistical analysis can be employed to identify certain properties of the data. For example, when extracting the IPCs of documents a result of the statistical analysis can be that certain IPC classes typically occur jointly. This information can be stored separately and can serve for the definition of fields of technology.

To determine the number of citations of a document k within the set of documents each document of the set of documents - except the document k being considered - is searched for a citation of the document k. This is performed for all documents of the set being considered for the generation of the database.

In the example, considered here the data $D_i$ to be extracted out of the data source 106 belong to the following categories:

- legal status information

- bibliographic information

- patent family information

- IPC information

- number of citations

- patent applicant information

- inventor information.

The data is either directly available in the external and/or internal databases being used or is determined based on data available in such external and/or internal databases. For example, whether a patent is a triad patent or not is information not directly available in external patent databases but this information can be readily inferred by a suitable software routine from patent family information.

In the example considered here the set of data being extracted for each patent document is as follows:

Data $D_0$ = Date of grant

Data $D_1$ = Number of priorities claimed for the patent

Data $D_2$ = Number of countries in which corresponding patent applications have been filed (so called "patent-family")

Data $D_3$ = patent granted (logical value); $D_3$ = 1 in case of grant; $D_3$ = 0 in case patent application is not granted or if patent did lapse.

Data $D_4$ = The names of the countries of the patent family; preferably country codes of the European Patent Office are used

Data $D_5$: (i) in case the patent is a "triad-patent": $D_5$ = 1; (ii) in the opposite case: $D_5$ = 0; a patent is defined to be a "triad-patent" if it has counterparts at least in the United States, the European Patent Office and Japan.

Data $D_6$: (i) in case a patent granted by the European Patent Office exists in the patent family: $D_6$ = 1 (ii) in the opposite case: $D_6$ = 0

Data $D_7$ = same definition as for data $D_6$, but for United States-patent.

Data $D_8$ = same definition as for data $D_6$ but for Japanese patent

Data $D_9$ = Number of inventors of the patent.

Data $D_{10}$ = Number of main international patent classes (IPC)

Data $D_{11}$ = Total number of IPC classes of patent

Data $D_{12}$ = Number of applicants

Data $D_{13}$ = Number of citations of the patent in other patent applications/patents/scientific or technical documents, preferably in documents having the same priority, publication or grant year.

Data $D_{14}$ = Date of grant

Data $D_{15}$ = Date of lapse of the patent

These data $D_0$ to $D_{15}$ can be extracted out of the external data sources 108 automatically by querying the databases by means of a suitable computer program without human interaction. Further data $D_{16}$ to $D_m$ can be extracted from the internal data source 110 such as licensing value of the patent, compensation payments to employee inventors and the like.

As a result of processing step 104 a set of data $D_i$ results for patent document k. This is depicted as step 112 in figure 1.

The set of data $D_i$ as such typically is not directly expressive of a quality aspect of the document k to which the set of data belongs as it is not related to other documents. Therefore in step 114 quality measurements $Q_j$ are calculated by evaluating the set of data $D_i$ made available in step 112. To determine the quality measurements $Q_j$ a filter function f is applied to the set of data $D_i$ or a sub-set of the data $D_i$ in order to filter out or reduce insignificant variance of data. The term "insignificance variance of data" is used in the following for variance of the data which is caused by influences not related to the objective quality of the data value.

The purpose of the filtering function is to relate a data $D_i$ to an objective norm such that an objective quality measurement value results.

The objective norm is chosen in accordance with the cause of the data variance. For example, older patents are cited more frequently than younger patents; hence the patent age can be utilized as a reference value by the software, i.e. dividing the number of citations by the patent age.

In general the cause or set of causes for the insignificant variance of a data $D_i$ are identified; the influence of these causes on the data $D_i$ is eliminated by a filtering operation For this purpose a variety of filter operations can be selected such as a division by a reference value $R_j$. Thus, in general terms a quality measurement $Q_j$ is calculated by means of a function f:

$$Q_j = f\,(D_i, R_j).$$

For example, the information whether a patent is granted or not (data $D_3$) as such may not be very significant in terms of competitive analysis as the typical quota of patent grants of the number of patent applications varies from patent office to patent office and between different fields of technologies. To establish a more objective quality measurement value and thereby reducing insignificant variance of data, the logical value of $D_3$ of the patent document k being processed is divided by a reference value $R_0$ such that

$$Q_0 = D_3 \,/\, R_0.$$

$R_0$ can be chosen to be the average grant quota of the patent office being competent for the granting of the patent document considered.

The quality measurement $Q_1$ is defined as follows:

$$Q_1 = D_2 \,/\, R_1$$

and is thus representative of the relative international scope of the patent family considered. Again, the typical international scopes of patent filings can vary to a large extend from field of technology and industry to another. Thus, $R_1$

which is a second reference value is used to filter out insignificant variance of data. In the example considered here $R_1$ equals the average number of countries of patent families in which corresponding patent applications have been filed averaged over all the companies 1 to 5. A further criterion for the choice of $R_1$ can be the size of the company considered as large companies typically file within a broader range of countries as compared to smaller or mid-size companies.

Preferably the data $D_2$ is determined by evaluating the number of countries in which corresponding patent applications have been filed by calculating the following weighted sum:

$$D_2 = \sum_n W_n (Country_n) ,$$

where $Country_n$ are the countries in which patents or patent applications of the same patent family exist and $W_n$ is the weight of a country. The weight of a country can be determined in proportion to its economic importance such as its gross national product. Other choices for $W_n$ are possible. In case this definition of $D_2$ is used the same definition applies correspondingly for the determination of $R_1$.

The quality measurement $Q_2$ is defined as follows:

$$Q_2 = D_{11} / R_2$$

whereby $R_2$ is a third reference value. $Q_2$ is a measurement for the relative technological scope of the patent as indicated by the number of its IPC classes $D_{11}$. Again the number of IPC classes of patents can vary broadly within different fields of technology. To filter out insignificant variances the third reference is chosen - by way of example - as the average number of IPC classes of patents/patent applications of the companies 1 to 5. In addition or alternatively the data $D_{12}$ can be used to determine $Q_2$.

Preferably the data $D_{11}$ or $D_{12}$ is determined by evaluating the IPC classes or main IPC classes by calculating the following weighted sum:

$$D_{11/12} = \sum_n W_n (IPC_n) ,$$

where $W_n$ is the weight of the IPC or (in the case of $D_{12}$) main IPC class $IPC_n$. The weight $W_n$ of an IPC class or main IPC class can be determined in proportion to the distinctiveness of this IPC class to the other IPC classes being evaluated. In case this definition of $D_2$ is used the same definition applies correspondingly for the determination of $R_2$.

The quality measurement $Q_3$ is defined as follows:

$$Q_3 = D_{13} / R_3,$$

whereby $R_3$ is a fourth reference value. $Q_3$ is a measurement for the relative number of citations of the document considered. This is an important quality indicator. Again, the typical absolute number of citations can vary in different fields of technology; in the example considered here the fourth reference value is thus chosen to be the average number of citations of the patents of the companies 1 to 5 to filter out insignificant variance of data.

To perform this step 114 the reference values $R_0$ to $R_3$ are accessed from data memory 116. As a result of step 114 a set of quality measurements $Q_j$ results for the patent document k. This set of quality measurements $Q_j$ is provided in step 118.

In step 120 an overall quality measurement $G_k$ for the patent document k is calculated as a function of the set of quality measurements $Q_j$ provided in step 118. The individual quality measurements $Q_j$ are expressive of a variety of quality criteria but do not directly provide a quantitative measurement value for the quality of a document k as a whole taking into consideration all relevant aspects. By means of the calculation of the overall quality measurement such an overall quantitative measurement value is provided integrating technical, economical and legal aspects.

In the preferred embodiment considered here the overall quality $G_k$ is determined as follows:

$$G_k = \sum_n C_n Q_n$$

The coefficients $C_n$ can be chosen to be equal 1 such that the overall quality measurement $G_k$ equals the mean value of the quality measurements $Q_j$. Alternatively, the overall quality measurement $G_k$ can be calculated as a weighted average whereby the weighting coefficients $C_n$ are outputted from data memory 122 {in the example considered here $C_0$, $C_1$, $C_2$ and $C_3$}. To determine the weighting coefficients a method of univariable or multivariable data analysis, such as logistic regression, or general least square regression can be advantageously employed. Such a methods are described in:

Press, S.J., Wilson, S. (1978), Choosing between logistic regression and discriminant analysis, in: Journal of the American Statistical Association, Vol. 73, S. 699-705;

Aldrich, J.H., Nelson, F.E. (1984), Linear probability, Logit, and Probit Models, Beverly Hills, London, and

Hair, J., Anderson, R., Tatham, R., Black, W. (1998), Multivariate Data Analysis, 5th edition, Upper Saddle River, New Jersey.

These data analysis methods can be carried out automatically by a suitable software routine based on the data available in the database according to the invention.

In step 124 a data record is outputted for each document k. The record contains the set of quality measurements $Q_j$ as provided in step 118, the set of data $D_i$ as provided in step 112 and the overall quality measurement $G_k$ as provided in step 120 for a particular patent document k. This results in a database containing such a record for each patent document k. This database can form the basis for further data processing and data analysis steps as well as for providing an intuitive display of competitive patent information.

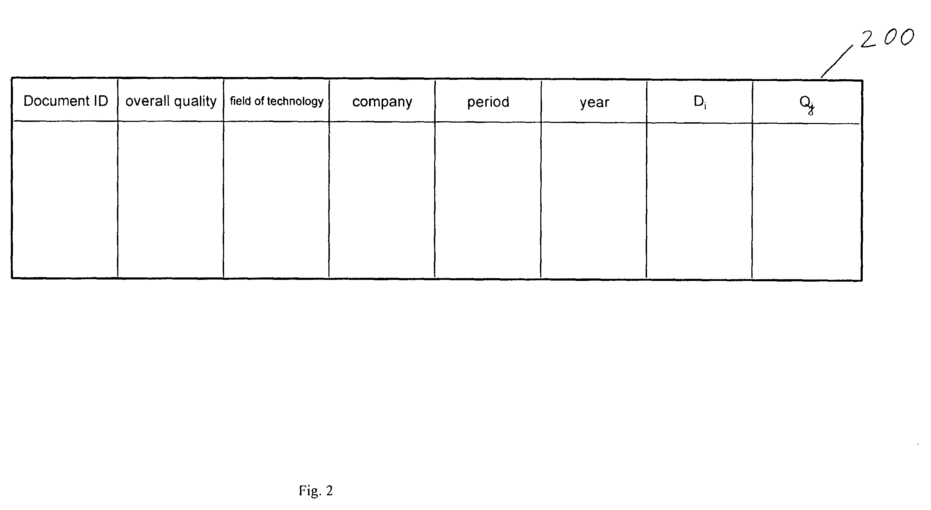

Fig. 2 shows an output format for outputting the results of a database query to a user. The output format is in the form of a table 200. The columns of the table 200 contain the following information (from the left to the right):

Document ID: This is a unique document number identifying the kth patent document of the set of documents.

Overall quality: This column contains the overall quality measurement $G_k$ of the patent document k.

Field of Technology: This column contains an identifier indicative of the filed of technology $TF_p \in \{ TF_0, TF_1, TF_2, TF_p ..., TF_L \}$ to which the patent document k belongs. Field of Technology can be defined by means of IPC classes or by a string of keywords or otherwise. For example, the patent document k will be classified to belong to the field of technology $TF_1$ if it belongs to the IPC class or the group of IPC classes defining the filed of technology $TF_1$.

Alternatively, the field of technology $TF_1$ can be defined by a number of keywords. If the patent document k contains all the keywords, it is defined to belong to the field of technology $TF_1$, Other definitions of fields of technology such as by company name are possible. A suitable number of fields of technologies can be defined depending on the direction of the analysis.

The next column contains the name of the company, which owns the patent document k. The following column indicates a period of time of the patent documents as specified; the period of time can relate to the date of filing, the priority date or the date or grant depending on which option the user chooses to take. For example the user can specify that only patent documents having a filing date within a certain period of time are to be displayed in the table.

The following column contains the year of grant of the patent and the next two following columns contain the data sets $D_i$ und $Q_j$ respectively as explained with respect to Fig. 1 in particular steps 112 and 118.

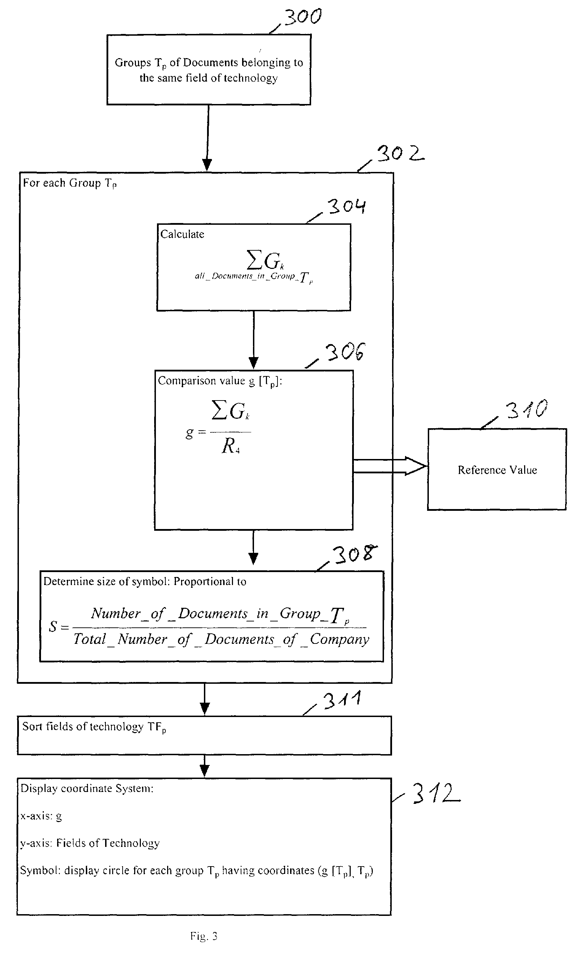

With reference to Fig. 3 now an embodiment of the method of data processing and displaying of data in accordance with the invention is described in greater detail. This processing method relies on the database as created for the selected set of documents and as described with respect to Fig. 1, in particular step 124. In step 300 of Figure 3 the documents of the set of documents are grouped into fields of technology $TF_p$. Each group of technology $TF_p$ is well defined (cf. above definition) to automatically perform the sorting operation of the documents into such groups by means of a suitable computer program. Possible definition criteria are (i) an IPC class or group of IPC classes or (ii) a certain keyword, combination of keywords or Boolean search query.

In the case (i) all documents of the set of documents which match the IPC class or match at least one or more of the IPC classes of the field of technology are selected to belong to that particular field of technology. In the case (ii) a query is performed on the documents to find documents matching the keyword, the combination of keywords or the Boolean search query.

The result of step 300 are groups $T_p$ of documents. The documents belonging to the same group $T_p$ belong to the same field of technology $TF_p$ in accordance with the applied field of technology definition.

In step 302 further data processing operations are performed. Step 302 is carried out consecutively for each group $T_p$ of documents. If the set of documents comprises documents of different companies step 302 can be performed consecutively for each sub-set of documents of a group $T_p$ belonging to the same company.

Step 302 comprises processing steps 304, 306 and 308:

In step 304 the overall qualities $G_k$ of all documents belonging to the processed group $T_p$ of documents or the considered sub-set of documents belonging to the group $T_p$ are integrated by calculating the sum of all values $G_k$ of all documents in the considered group or sub-set of the group $T_p$, referred to as the "integrated overall quality $G_k$" in the following:

$$\sum_{all\_Documents\_in\_Group\_T_p} G_k$$

In step 306 the resulting value of the processing performed in step 304 is compared to a reference value $R_4$. The reference value is stored in memory location 310. The reference value serves as an objective criterion for assessing the value of the integrated overall qualities $G_k$. The comparison is performed by dividing the integrated overall qualities $G_k$ by a reference value such that a comparison value g results.

$$g = \frac{\Sigma G_k}{R_4}$$

There are a variety of options for the definition of the reference value $R_4$. This will be explained in more detail below.

In one application the patenting activity of company 1 is to be compared to the patenting activity of its four major competitors companies 2, 3, 4 and 5. In this application the groups $T_p$ of documents are sub-divided into sub-sets of documents comprising only documents belonging to an individual company. As a consequence the integrated overall quality measurement value determined in step 304 for company 1 is determined only taking into consideration patent documents of company 1; likewise the integrated overall quality measurement values for the companies 2 to 5 are determined based on documents belonging to the respective company.

To provide the reference value $R_4$ the operations of steps 300 and 304 are carried out for patent documents of each of the companies 1 to 5 such that for each of the companies an integrated overall quality measurement value for a particular field of technology results. The integrated overall quality measurements established in step 304 for the companies 1 to 5 are averaged such that the reference value results.

It is also possible to employ a weighted average or to use only the integrated overall quality measurements of one company of the companies 2 to 5 as the reference value against which the integrated overall quality measurement of company 1 is compared.

The invention enables a user to readily vary its choice of parameters as the processing required to produce the comparison value g relies on the database which has been produced previously (cf. as described in detail with respect to Fig. 1). Once this database has been created the subsequent processing steps for further analysis require a relatively small amount of processing power and time even for a large set of thousands of documents. This has the advantage that the user can frequently vary parameters such as the time frame, geographic origin, field of technology or industry and the kind of comparison criteria to analyze the set of documents from different view angles and to find answers to a variety of competitive analysis problems.

After the calculation of the comparison value g in step 306 a parameter S is calculated in step 308 to determine the size of a symbol to be displayed in a coordinate system to symbolize the relative patenting activity of company 1 in the field of technology considered. This parameter S is calculated by dividing the number of documents of company 1 belonging to the group of documents $T_p$ by the total number of documents of company 1 comprised in the set of documents:

$$S = \frac{Number\_of\_Documents\_in\_Group\_T_p}{Total\_Number\_of\_Documents\_of\_Company}$$

After step 302 has been performed for all groups $T_p$ (or for all sub-sets of documents of all groups $T_p$) step 311 is carried out to sort the fields of technology $TF_p$. The sorting criterion is the attractiveness of the fields of technology $TF_p$ considered.

The attractiveness A ($TF_p$) of a field of technology $TF_p$ can be determined as follows:

$$A(TF_p) = \sum_n W_n (Criterion\_TF_p),$$

wherein $W_n$ is the weight of an attractiveness criterion (*Criterion_TF_p*) of the field of technology $TF_p$.

A variety of criteria can be used to define the attractiveness of a technology. Examples for such definitions are as follows:

1. The relative growth of patenting activity in a given field of technology $TF_p$ within the group of companies considered or for all applicants, worldwide or within a certain territory;

2. Market growth potential of a certain field of technology;

3. Profit growth potential of a certain field of technology; or

other economic growth criteria which relate to a field of technology. Again the method of logistic regression can be used to determine the relation of such economic criteria to the relative values of fields of technologies.

Again, the weights $W_n$ can be determined by means of a data analysis method, such as logistic regression, as described above with respect to the determination of the quality measurements.

After the fields of technology have been sorted according to their respective attractiveness step 312 is carried out to display the results. In this example the display is done in a Cartesian coordinate system. Other coordinate systems or methods of display are also possible.

In the case considered here the x-axis is indicative of the comparison value g whereas the y-axis is indicative of the fields of technology considered. The fields of technology are arranged along the y-axis with increasing attractiveness of the technologies.

For each group $T_p$ a symbol having a size proportional to the parameter value S as determined in step 308 is displayed. The x-coordinate of a symbol representing a group $T_p$ is given by the comparison value g of that group $T_p$ and the y-coordinate is given by the field of technology of the group $T_p$. If a circle is chosen as a symbol the center of the circle is placed on these x-y-coordinates; the diameter of the circle is proportional to the parameter value S.

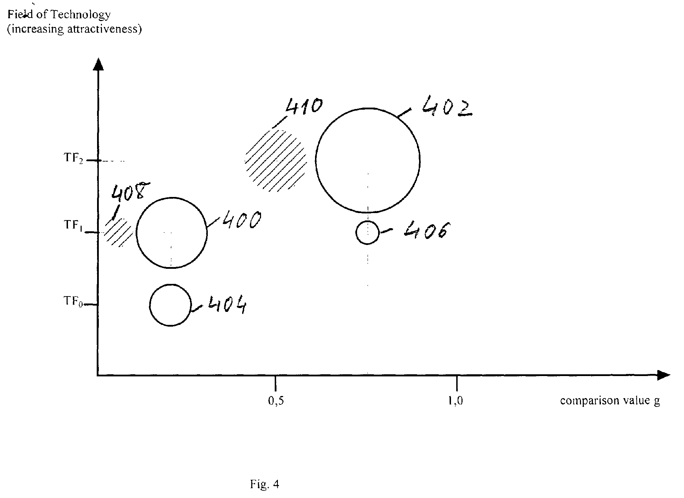

Figure 4 shows a simplified display as generated in step 312 of Figure 3. The x-axis of the coordinate system is the comparison value g; the y-axis is given by the fields of technology sorted according to increasing attractiveness. A circle 400 is displayed in the coordinate system at the coordinates g = 0,2 and Field of technology = $TF_1$. Circle 400 represents the group of patent documents $T_1$ of Company 1. Further a circle 402 is displayed at the coordinates g = 0,75 and Field of technology = $TF_2$ representing the patent documents of group $T_2$ of company 1.

The diameters of the circles 400 und 402 are determined by the parameter values $S(T_1)$ and $S(T_2)$ for the groups of documents $T_1$ and $T_2$, respectively. In the example considered here the value for $S(T_1)$ as determined in step 308 of Fig. 3 is 0,1 whereas the value for $S(T_2)$ is 0,15. The diameters of the circles are given by multiplying the respective parameter values with a length unit. If for example - 10 cm is chosen as a length unit the diameters of the circles are 0,1 * 10 cm = 1 cm and 0,15 * 10 cm = 1,5 cm, respectively. As a consequence the size of the circles is indicative of the patenting activity of company 1 within the fields of technology considered. Preferably the measurement unit is chosen such that the circles do not overlap which becomes more important in case of a larger number of circles displayed.

Alternatively the size of the symbol can also be determined taking into consideration a variety of weighted criteria and employing a data analysis method, such as logistic regression, as described with respect to the quality measurements.

Further Fig. 4 shows circles 404 and 406 at coordinates g = 0,2; Field of technology = $TF_0$ and g = 0,75; Field of technology = $TF_1$, respectively, for patent documents of company 2 of the set of documents. The respective parameter values are $S(T_0) = 0,05$ and $S(T_1) = 0,025$. This way it becomes apparent that (i) company 2 is in a worse competitive position as compared to company 1 as it is less active in the fields of technology considered and (ii) is putting to much of its resources in less attractive fields of technology like $TF_0$.

Further Fig. 4 shows circles 408 and 410 being representative of groups $T_k$ of patent documents of company 1 but for a different time window then the respective circles 400 und 402. For example circles 408 and 410 have been generated based on a sub-set of the patent documents of company 1 having a filing date between 1990 and 1995 whereas circles 400 and 402 have been generated for patent documents having a filing date between 1995 and 2000. This way a trend becomes apparent: Company 1 has (i) substantially strengthened its patent position in both fields of technology $T_0$ und $T_1$ as indicated by the g-coordinates which have become stronger over time for both fields and (ii) has put more emphasis on the more important field of technology $T_2$ as indicated by the size of circle 402 as compared to circle 410.

The display of Fig. 4 provides for an intuitive analysis of the competitive positioning of company 1 as far as patenting is concerned. In subsequent steps the corresponding displays of the competing companies 3 to 5 are also generated and merged into the same display.

The corresponding displays of the companies 1 to 5 can be compared and correlated in subsequent processing steps. In case the displays of the two companies Company A and Company B are found to be similar, i.e. have about matching display patterns, such two companies are considered close competitors and grouped into the same cluster of companies. One measurement for determining the degree of similarity of the displays of two companies is the size of the overlap region of the two corresponding displays. This size can be calculated automatically based on the two corresponding displays. The size is compared against a threshold value; if it surpasses the threshold value the two companies are deemed close competitors and grouped into the same cluster.

As a result a set of clusters is produced each cluster containing a set of companies having similar displays and which are thus considered close competitors.

Instead of relating the above-described steps to individual companies it is also possible to consider groups of related companies as one entity. This is particularly advantageous in the case of international groups of companies, such as a US parent company having a large number of national and foreign subsidiaries belonging to the some group and which also file patent applications. Such groups of companies can be considered as one company entity and all patent documents belonging to a member of that company group are considered to belong to that one company entity.

The generation of such entities based on the available raw data, i.e. the set of documents and related information, can be performed automatically: One possibility is two define two companies having a company name containing the same name string as belonging to the same company group; for example Motorola, Inc. and Motorola GmbH - the German subsidiary of Motorola, Inc. - both contain the string "Motorola" and are thus considered to belong to the same group of companies. Alternatively a business information database containing company specific information can be accessed by the software to determine whether two different companies belong to the same group of companies.

The invention also allows to show patenting trends over time by carrying out the data processing method as described in detail with respect to Figure 3 for different time windows. The processing for each time window results in an output; when these outputs are overlapped trends become apparent.

The methods of the invention are preferably implemented by a computer program or a number of computer programs; desktop windows computers typically provide sufficient processing power even for large document databases because of the advantageous properties of the invention. A computer having stored such a computer program and/or a database of the invention is a powerful tool for performing competitive analysis and providing a basis for executive decision-makings.

## Claims

1. A method for generating a database for storing quality measurements for a set of documents, such as scientific, technical, business and/or legal documents, in particular patents, patent applications, technical or scientific publications,
comprising the steps of

   a) accessing at least one data source containing data of and/or relating to the set of documents;

   b) extracting a set of data out of the data source for each document of the set of documents; and

   c) determining a set of quality measurements for each document of the set of documents by processing each set of data belonging to the corresponding document.

2. The method of claim 1 further comprising the steps of determining for each document an overall quality measurement by processing the set or a sub-set of the set of quality measurements belonging to that document; and storing the sets of quality measurements and the overall quality measurements, preferably by storing a data record for each document of the set of documents, the data record comprising at least a sub-set of the following data fields: a document identifier, overall quality, field of technology, company name, period, year of application; the set of data or a sub-set of the set of data, the set of quality measurements or a sub-set of the set of quality measurements.

3. The method of claim 2 the step of processing the set of quality measurements comprising a step of calculating a weighted average of the quality measurements of the set of quality measurements.

**4.** The method of claim 3 whereby the weights for calculating the average are determined by a method of univariable or multivariable data analysis, such as logistic regression, wherein the quality measurements serve as independent information and at least a sub-set of the set of data being indicative of the economic and/or technical value of a document serve as dependent information for such a data analysis.

**5.** The method of anyone of the preceding claims the set of data comprising at least a sub-set of the following patent related data for each patent or patent application or patent/patent application related document: Number of priorities claimed; number of countries in which corresponding patent applications have been filed; countries in which corresponding patent applications have been filed, in particular data indicating a triad application or patent; number of inventors; number of main IPC classes; total number of IPC classes; number of applicants; number of citations of document in other patents/patent applications or technical publications; grant of patent; date of grant; date of lapse; number of related granted patents; licensing of the patent/patent applications, in particular licensing income; compensation payments to employee inventors; purchase price paid for patent; company usage of patent/patent application; company savings based on usage of patent.

**6.** The method of anyone of the preceding claims the set of quality measurements being determined by an operation of filtering at least a sub-set of the set of data to reduce insignificant variance of data.

**7.** The method of claim 6 the data being indicative of the grant of a patent being assigned a first logical value in case the patent under consideration is granted and being assigned a second logical value in the contrary case, the operation of filtering comprising a step of dividing the logical value by a first reference value, the first reference value preferably being an average value, such as the average quota of patent grants of the competent patent office, preferably related to the field of technology of the patent considered.

**8.** The method of claim 6 or 7 wherein a data value being indicative of the international scope of the patent under consideration is determined by evaluating the number of countries in which corresponding patent applications have been filed, such as by calculating a weighted sum of the number of countries, the weights being chosen in accordance with the importance of a country, and the operation of filtering comprising a step of dividing the data value by a second reference value, the second reference value preferably being an average value, such as the weighted average number of countries in which corresponding patent applications have been filed of a company or a group of companies or within a certain field of technology.

**9.** The method of claim 6, 7 or 8 the operation of filtering comprising a step of dividing a weighted number of IPC classes, such as the number of main IPC classes or the total number of IPC classes, by a third reference value, the third reference value preferably being an weighted average value, such as the weighted average number of IPC classes of patents/patent applications of a company or a group of companies or of patents/patent applications within a certain field of technology, whereby the weights preferably are proportional to the distinctiveness of the IPC classes considered.

**10.** The method of any of claims 6 to 9 the operation of filtering comprising a step of dividing the number of citations by a fourth reference value, the fourth reference value preferably being an average value, such as the average number of citations of patents/patent applications of a company or a group of companies or of patents/patent applications within a certain field of technology, the number of citations preferably being the number of citations in documents having the same application, publication or grant year.

**11.** A method for processing information stored in a database being generated in accordance with anyone or more of the preceding claims, the method comprising the steps of

 a) grouping the documents into fields of technology such that groups of documents belonging to the same technology result;

 b) for all such groups of documents:

 - integrating the overall quality measurements of at least a sub-set of documents belonging to the same group such that an integrated quality measurement results;

 - comparing the integrated quality measurements to a fifth reference value, such as the average of corresponding integrated quality measurements of a group of competing companies, to calculate a comparison value.

**12.** The method for processing information of claim 12 further comprising the steps of:

a) sorting the fields of technology in accordance with the attractiveness of the technology, such as by calculating a technology attractiveness value for each such field of technology by calculating a weighted sum based on a number of attractiveness criteria and sorting the fields of technology in accordance with the corresponding technology attractiveness values; and

b) for each of the groups of documents: displaying a symbol in a coordinate system, a first coordinate of the symbol being determined by the comparison value and a second coordinate of the symbol being determined by the field of technology of that group, the size of the symbol being indicative of a third coordinate, such as a relative share of documents of the company in that group, preferably the number of documents of the company considered in that group divided by the total number of documents of that company.

Fig. 1

200

| Document ID | overall quality | field of technology | company | period | year | $D_i$ | $Q_g$ |
|---|---|---|---|---|---|---|---|
| | | | | | | | |

Fig. 2

*300*

Groups $T_p$ of Documents belonging to the same field of technology

*302*

For each Group $T_p$

*304*

Calculate

$$\sum_{all\_Documents\_in\_Group\_T_p} G_k$$

*306*

Comparison value g $[T_p]$:

$$g = \frac{\sum G_k}{R_4}$$

*310*

Reference Value

*308*

Determine size of symbol: Proportional to

$$S = \frac{Number\_of\_Documents\_in\_Group\_T_p}{Total\_Number\_of\_Documents\_of\_Company}$$

*311*

Sort fields of technology $TF_p$

*312*

Display coordinate System:

x-axis: g

y-axis: Fields of Technology

Symbol: display circle for each group $T_p$ having coordinates (g $[T_p]$, $T_p$)

Fig. 3

Fig. 4

European Patent Office

**EUROPEAN SEARCH REPORT**

Application Number

EP 00 11 8457

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | BROCKHOFF K K: "INDICATORS OF FIRM PATENT ACTIVITIES" PORTLAND, OCT. 27 – 31, 1991,NEW YORK, IEEE,US, vol. –, October 1991 (1991-10), pages 476-481, XP002923550 * abstract * * page 476, left-hand column, line 39 – page 476, right-hand column, line 46 * * page 477, right-hand column, line 18 – page 480, left-hand column, line 43; figure 2 * | 1-6,11, 12 | G06F17/30 |
| X,D | US 5 991 751 A (NAVARRETE JORGE A ET AL) 23 November 1999 (1999-11-23) * abstract * * column 3, line 59 – column 4, line 29 * * column 10, line 4 – column 11, line 19 * * column 17, line 50 – column 18, line 54 * * column 57, line 50 – column 59, line 41 * | 1,2,11 | |
| A,D | US 6 038 561 A (SNYDER DAVID L ET AL) 14 March 2000 (2000-03-14) * abstract * * column 3, line 26 – column 4, line 18 * * column 14, line 60 – column 15, line 59 * * column 23, line 1 – column 24, line 47 * | 1-12 | TECHNICAL FIELDS SEARCHED (Int.Cl.7) G06F |

–/––

The present search report has been drawn up for all claims

| Place of search | Date of completion of the search | Examiner |
|---|---|---|
| THE HAGUE | 16 March 2001 | Boyadzhiev, Y |

**European Patent Office**

# EUROPEAN SEARCH REPORT

Application Number

EP 00 11 8457

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | STEFANOV V: "Some Possibilities of a @?Patents@? Database in Determining a Firm's Policy" WORLD PATENT INFORMATION,GB,ELSEVIER SCIENCES PUBLISHING, BARKING, vol. 17, no. 3, 1 September 1995 (1995-09-01), pages 201-204, XP004037786 ISSN: 0172-2190 * the whole document * | 1-12 | |

TECHNICAL FIELDS SEARCHED (Int.Cl.7)

The present search report has been drawn up for all claims

| Place of search | Date of completion of the search | Examiner |
|---|---|---|
| THE HAGUE | 16 March 2001 | Boyadzhiev, Y |

## ANNEX TO THE EUROPEAN SEARCH REPORT
## ON EUROPEAN PATENT APPLICATION NO.

EP 00 11 8457

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2001

| Patent document cited in search report | | Publication date | Patent family member(s) | | Publication date |
|---|---|---|---|---|---|
| US 5991751 | A | 23-11-1999 | AU<br>EP<br>WO | 7953198 A<br>0986789 A<br>9855945 A | 21-12-1998<br>22-03-2000<br>10-12-1998 |
| US 6038561 | A | 14-03-2000 | AU<br>WO | 4905997 A<br>9816890 A | 11-05-1998<br>23-04-1998 |